Europäisches Patentamt

European Patent Office

Office européen des brevets

(19)

(11) Numéro de publication : **0 379 425 B1**

(12) **FASCICULE DE BREVET EUROPEEN**

(45) Date de publication du fascicule du brevet :
**30.03.94 Bulletin 94/13**

(51) Int. Cl.⁵ : **G01S 5/16**

(21) Numéro de dépôt : **90400125.2**

(22) Date de dépôt : **17.01.90**

(54) **Système de détermination de la position d'au moins une cible par triangulation.**

(30) Priorité : **18.01.89 FR 8900531**

(43) Date de publication de la demande :
**25.07.90 Bulletin 90/30**

(45) Mention de la délivrance du brevet :
**30.03.94 Bulletin 94/13**

(84) Etats contractants désignés :
**DE GB IT NL SE**

(56) Documents cités :
**DE-A- 3 023 290**
**DE-A- 3 642 196**
**FR-A- 2 175 959**
**GB-A- 2 070 877**
**US-A- 3 706 493**
**PATENT ABSTRACTS OF JAPAN, vol. 6, no.**
**148 (P-133)[1026], 7 août 1982 & JP-A-57-69 205**

(73) Titulaire : **SAT Société Anonyme de
Télécommunications
41, rue Cantagrel
F-75631 Paris Cedex 13 (FR)**

(72) Inventeur : **Bertrand, Michel Paul
6 rue Ampère
F-94120 Fontenay-sous-Bois (FR)**
Inventeur : **Bucher, Michel Benoît
8 boulevard Jourdan
F-75014 Paris (FR)**
Inventeur : **Delclaux, André René
37 rue Maurice Denis
F-94500 Champigny sur Marne (FR)**

(74) Mandataire : **Bloch, Gérard et al
2, square de l'Avenue du Bois
F-75116 Paris (FR)**

## Description

La présente invention a pour objet un système de détermination de la position d'au moins une cible émettant un rayonnement, comprenant :
- deux dispositifs de visée passifs, sensibles audit rayonnement, disposés à distance l'un de l'autre et mobiles en rotation autour d'un axe commun sensiblement vertical,
- des moyens de mesure de l'intensité du rayonnement reçu par chacun des dispositifs de visée selon une ligne de visée balayant un plan de visée sensiblement vertical, commun aux deux dispositifs de visée,
- des moyens pour, en réponse aux intensités mesurées, extraire les valeurs des angles de site de ladite cible relativement aux deux dispositifs de visée, et,
- des moyens pour, en réponse aux valeurs des angles de site, calculer la distance de ladite cible par triangulation dans ledit plan de visée commun sensiblement vertical.

Un tel système est utilisé au sol ou à bord d'un navire, par exemple, pour surveiller et, le cas échéant, désigner à un système d'armes les cibles qui menacent le site d'implantation du système, ou le navire à bord duquel il est embarqué.

On connaît déjà un système du type défini ci-dessus, décrit dans la demande britannique No. 2 070 877. Dans ce système, les deux dispositifs de visée sont mécaniquement couplés et montés sur la même tourelle mobile en rotation autour d'un axe vertical. Il est prévu un unique dispositif de mesure de l'intensité du rayonnement reçu, qui sert pour chacun des dispositifs de visée, ainsi qu'un unique dispositif d'entraînement en rotation de la tourelle.

Ce système a pour inconvénient une précision limitée dans la détermination de la distance de la cible, du fait que la distance entre les deux dispositifs de visée est elle aussi limitée, tant pour des raisons mécaniques qu'optiques. Il est en effet bien connu que la précision d'un système de triangulation est liée à la valeur de la distance de sa base, ici la distance entre les deux dispositifs de visée.

Or, dans le système connu, il n'est pas possible d'augmenter trop cette distance, car la structure mécanique creuse qui supporte le dispositif de visée supérieur devient trop haute et trop lourde, et difficile à entraîner. De plus, du fait que le trajet optique du rayon qui pénètre par le dispositif de visée inférieur doit être de même longueur que le trajet optique du rayon qui pénètre par le dispositif de visée supérieur, il se pose un problème si la distance entre les deux dispositifs de visée est trop grande.

Par ailleurs, et toujours pour des raisons mécaniques, il n'est pas possible d'utiliser, dans les dispositifs de visée, des lentilles de trop grand diamètre qui augmentent le poids de l'ensemble mécanique mobile en rotation, et introduisent, tout au moins dans le cas du dispositif de visée supérieur, un balourd.

De plus, le système connu implique l'emploi d'une lame semi-réfléchissante qui introduit une perte d'énergie mesurée, diminuant d'autant la sensibilité.

Par ailleurs, dans le système connu, la hauteur du champ commun à chacun des dispositifs de visée est plus faible que celle du champ de chacun de ces dispositifs.

Enfin, ce système connu ne permet pas la détermination des distances de plusieurs sources se trouvant en même temps dans le plan de visée.

La présente invention vise à pallier les inconvénients précédents.

A cet effet, elle a pour objet un système du type défini ci-dessus, caractérisé par le fait que,
- chacun des deux dispositifs de visée comprend ses propres moyens de mesure de l'intensité du rayonnement reçu, ses propres moyens d'entraînement en rotation autour dudit axe commun, et ses propres moyens de mesure de son angle de gisement, et,
- il est prévu des moyens de commande desdits moyens d'entraînement en rotation autour dudit axe commun, en réponse aux valeurs des angles de gisement mesurés, agencés pour que lesdits angles de gisement soient égaux.

Avec le système de l'invention, il n'y a ni couplage optique, ni couplage mécanique, entre les deux dispositifs de visée. Il n'y a aucun couplage optique du fait que chaque dispositif de visée comprend ses propres moyens de mesure de l'intensité du rayonnement reçu, et aucun couplage mécanique du fait que chaque dispositif est mécaniquement indépendant de l'autre et entraîné par ses propres moyens d'entraînement. Ceci revient à dire que, dans le système de l'invention, les dispositifs de visée constituent des entités distinctes qui reçoivent et délivrent des informations uniquement sous forme électrique. Ceci a notamment pour conséquence le fait que l'on peut les disposer à une grande distance l'un de l'autre pour augmenter la précision du système. De plus, comme les dispositifs de visée sont mécaniquement indépendants, il est possible, toutes choses égales par ailleurs, d'utiliser des lentilles d'un poids, et donc d'un diamètre, plus important, pour une meilleure précision.

Il est à noter que, du fait que les deux dispositifs de visée sont disposés sur un même axe vertical, les angles morts du système s'étendent autour de cet axe vertical. Ceci est peu gênant en pratique, car les sources menaçantes commencent toujours par se présenter relativement bas sur l'horizon, avant de se trouver à la verticale du système, ce qui, par ailleurs, se produit rarement. Ainsi, les cibles sont toujours détectées avant de parvenir dans l'angle mort supérieur. Dans le système de l'invention, le seul angle mort est celui qui est dû à la présence du support du dispositif de mesure supérieur, dans le champ du dispositif inférieur. Cet angle mort est toutefois, compte tenu des dimensions habituelles du support, relativement faible.

Le système de l'invention utilise deux dispositifs passifs de veille panoramique, par exemple sensibles au rayonnement infrarouge de la source. Chacun de ces systèmes pourrait être utilisé seul, pour déterminer les angles de gisement et de site de chaque source. La combinaison des deux dispositifs conformément à l'invention permet le calcul de la distance de chaque source, ce qui permet notamment d'éliminer un plus grand nombre de signaux parasites et de distinguer, parmi les sources dont les angles de gisement et de site varient peu d'un tour à l'autre, les sources mobiles en rapprochement, qui sont les plus menaçantes. De plus, avec de tels dispositifs qui permettent de mesurer les coordonnées d'une cible pour une suite d'instants de mesure régulièrement répartis, il est utile d'effectuer un filtrage prédictif des valeurs mesurées aux instants précédents, pour prévoir les valeurs les plus probables des coordonnées au prochain instant de mesure, compte tenu des valeurs précédemment mesurées et des lois générales qui régissent le mouvement des cibles. Lorsqu'on ne connaît pas la distance de la cible, on ne peut effectuer un tel filtrage sur les tours précédents que pour les deux coordonnées de gisement et de site de la cible. Avec le système de l'invention, en plus de son gisement et de son site, la distance de la cible est connue. Ceci permet d'effectuer un filtrage prédictif à trois dimensions, beaucoup plus sûr qu'un filtrage à deux dimensions.

Le système de l'invention procure en fait tous les avantages d'un radar classique, puisqu'il permet notamment une surveillance panoramique autour de l'installation à protéger, et la détermination de la distance des cibles menaçantes. Toutefois, le système de l'invention ne souffre pas d'un des inconvénients les plus graves d'un tel radar, puisqu'il est, lui, totalement discret puisque passif. De plus, à bord d'un navire, le système de l'invention est beaucoup moins sensible à la présence des vagues qu'un radar classique.

Avantageusement, il est prévu des moyens pour déterminer, en réponse aux valeurs, en sortie desdits moyens d'extraction, de l'angle de gisement et de l'angle de site relatifs à l'un des dispositifs de visée, des premières plages de valeurs possibles pour l'angle de gisement et l'angle de site relatifs à l'autre dispositif de visée, et des premiers moyens pour comparer, aux premières plages de valeurs possibles, les valeurs, en sortie desdits moyens d'extraction, de l'angle de gisement et de l'angle de site relatifs à l'autre dispositif de visée et inhiber lesdits moyens de calcul de la distance de ladite cible lorsque ces valeurs en sortie desdits moyens d'extraction ne sont pas comprises dans les premières plages de valeurs possibles.

Dans ce cas, le système est capable de déterminer la distance de chacune des cibles d'une pluralité de cibles présentes simultanément dans la zone qu'il analyse sans risque de prendre une cible pour une autre et d'effectuer ainsi un calcul faux de la distance d'une cible, à partir de la valeur de l'angle de site sous lequel est vue cette cible depuis l'un des dispositifs de visée, et de la valeur de l'angle de site sous lequel est vue une cible différente depuis l'autre dispositif de visée. De plus, un certain nombre d'alarmes parasites, due par exemple à des bruits qui donneraient naissance à une détection par un seul des dispositifs de visée se trouvent ainsi éliminés.

Avantageusement encore, lesdits moyens d'extraction déterminent également les valeurs des intensités reçues par chacun des dispositifs de visée en provenance de ladite cible, lesdits moyens de détermination des premières plages de valeurs possibles déterminent également en réponse à la valeur, en sortie desdits moyens d'extraction, de l'intensité reçue par l'un des dispositifs de visée, une première plage de valeurs possibles pour l'intensité reçue par l'autre dispositif de visée, et les premiers moyens de comparaison comparent également la valeur, en sortie desdits moyens d'extraction, de l'intensité reçue par l'autre dispositif de visée à la première plage corespondante de valeurs possibles.

Cette dernière caractéristique renforce la sécurité apportée par la caractéristique énoncée précédemment du fait que l'intensité reçue en provenance de la source est utilisée comme critère de reconnaissance des rayonnements reçus en provenance de la même source.

Avantageusement encore, chacun desdits dispositifs de visée comprend une mosaïque de détecteurs élémentaires, lesdites intensités mesurées sont celles de pixels d'une image de la zone analysée par chacun des dispositifs de visée, et lesdits moyens d'extraction comprennent des moyens de détermination des coordonnées du pixel image de la cible et des moyens de détermination, par extrapolation, des coordonnées angulaires de la cible.

Dans ce cas, la distance maximale à laquelle peut être déterminée la distance de la cible, liée à la précision de la mesure des angles de site, est augmentée du fait que l'extrapolation élimine, au moins partiellement, les effets de la quantification dans la mesure de ces angles, lié à l'emploi d'une mosaïque de détecteurs élémentaires.

Avantageusement encore, lesdits moyens de détermination, par extrapolation, des coordonnées angulaires de la cible déterminent également, par extrapolation, l'intensité reçue en provenance de la cible.

La précision de la détermination des intensités reçues est accrue, ce qui réduit les risques de confusion entre deux cibles différentes.

Avantageusement encore, lesdits moyens de calcul de la distance de ladite cible comprennent des moyens de calcul des tangentes desdits angles de site, des moyens de calcul de la différence desdites tangentes, des moyens de filtrage prédictif de ladite différence, sur plusieurs tours de la rotation autour dudit axe commun, et des moyens pour calculer la distance de ladite cible en réponse auxdites tangentes et à ladite différence filtrée.

Le filtrage prédictif effectué sur la valeur de la différence des tangentes est plus facile et plus précis que celui qui pourrait être effectué sur la distance.

Avantageusement encore, il est prévu des moyens de pistage pour déterminer, en réponse aux coordonnées angulaires de la cible déterminées lors d'un tour de rang n, des deuxièmes plages de valeurs possibles pour les coordonnées angulaires de la cible lors du tour de rang (n+1), et des deuxièmes moyens pour comparer, aux deuxièmes plages de valeurs possibles, les valeurs déterminées lors du tour de rang (n+1) et réduire, en réponse à la distance mesurée lors du tour de rang n, ladite première plage de valeurs possibles d'angle de site, lorsque les valeurs déterminées au cours du tour de rang (n+1) sont comprises dans lesdites deuxièmes plages de valeurs possibles.

Le système est alors capable de suivre, sur plusieurs tours, l'évolution de chacune des cibles d'une pluralité de cibles réparties dans la zone analysée.

La présente invention sera mieux comprise à la lecture de la description suivante de la forme de réalisation préférée du système de l'invention, faite en se référant aux dessins annexés, sur lesquels :

- la figure 1 représente une vue de côté du système de l'invention,
- la figure 2 représente une vue de dessus du système de l'invention,
- la figure 3 représente un schéma par blocs du circuit électronique de commande et de désignation d'objectif du système de la figure 1,
- la figure 4 représente de façon simplifiée, la disposition relative d'une cible et du système de la figure 1,
- la figure 5 représente un schéma par blocs du circuit d'extraction des alarmes du circuit de la figure 3,
- la figure 6 représente un schéma par blocs du circuit de détermination des cibles et de calcul de leur distance du circuit de la figure 3,
- la figure 7 représente un schéma par blocs du circuit de calcul de la distance du circuit de la figure 6,
- la figure 8 représente une variante de réalisation du circuit de la figure 7,
- la figure 9 représente une variante de réalisation du circuit de la figure 6,
- la figure 10 représente une vue partielle d'une variante de réalisation du système de la figure 1,
- la figure 11 représente schématiquement le mât et une des plateformes du système de la figure 10 en présence d'une cible, et,
- la figure 12 représente schématiquement le mât en flexion et les plateformes du système de la figure 1 ou du système de la figure 10.

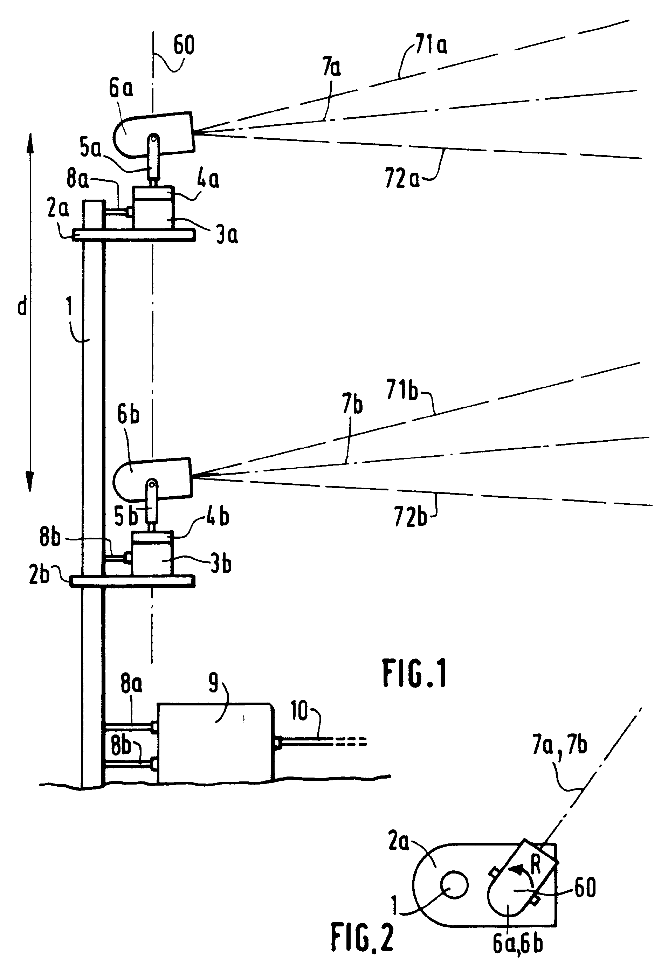

La figure 1 représente un système conforme à celui de l'invention, implanté au sol, au voisinage d'un site à protéger, et destiné à surveiller l'espace environnant pour détecter d'éventuelles cibles menaçantes, et pour déterminer leurs positions en vue de permettre leur destruction par un système d'armes.

Le système comprend deux dispositifs de visée mobiles en rotation, en l'occurence deux dispositifs de veille panoramique passive infrarouge, identiques et désignés par les références 6a et 6b.

Le dispositif 6a est soutenu par un étrier 5a, entraîné en rotation autour d'un axe vertical 60 par un moteur 3a. Ce mouvement de rotation est noté R sur la figure 2. Le dispositif 6a comprend, de façon non représentée car connue, une mosaïque, ici en forme de barrette, de détecteurs élémentaires infrarouges, disposée verticalement dans le plan focal d'une optique infrarouge non représentée car connue. Chaque détecteur élémentaire de la barrette mesure donc l'intensité du rayonnement infrarouge reçu par le dispositif 6a selon une direction associée à ce détecteur élémentaire. Le signal de sortie de chaque détecteur élémentaire est traité dans une chaîne élémentaire qui lui est associée, et qui comprend un préamplificateur, un amplificateur et un filtre. Un multiplexeur relie successivement et séquentiellement la sortie de chacune des chaînes élémentaires à une sortie commune. Il en résulte que le dispositif 6a mesure l'intensité du rayonnement infrarouge qu'il reçoit selon une ligne de visée balayant un plan de visée vertical. Ce plan de visée contient l'axe 60. Sur la figure 1, la ligne de visée est notée 7a et elle est représentée dans sa position médiane, position médiane autour de laquelle elle peut se déplacer jusqu'à deux positions extrêmes notées 71a et 72a. La vitesse de balayage du plan de visée par la ligne de visée 7a et la vitesse de la rotation R sont ajustées l'une par rapport à l'autre afin que le signal en sortie du multiplexeur soit un signal vidéo représentant une image infrarouge suffisamment précise de la zone analysée, zone qui est comprise entre les cônes d'axe 60 décrits par les positions extrêmes 71a et 72a au cours de la rotation R.

De même, le dispositif 6b est soutenu par un étrier 5b, entraîné en rotation, au tour du même axe vertical 60 que le dispositif 6a, par un moteur 3b. Comme le dispositif 6a, le dispositif 6b est agencé pour que sa ligne de visée 7b balaie un plan de visée vertical contenant l'axe commun 60, entre deux positions extrêmes notées 71b et 72b, et il délivre un signal vidéo représentant une image infrarouge de la zone qu'il analyse, zone qui est comprise entre les cônes d'axe 60 décrits par les positions extrêmes 71b et 72b au cours de la rotation R. La position moyenne de la ligne de visée 7b est parallèle à la position moyenne de la ligne de visée 7a.

Un capteur angulaire 4a mesure l'angle de gisement du plan de visée du dispositif 6a c'est-à-dire l'angle entre ce plan de visée et un plan vertical de référence, contenant l'axe commun 60. Ici, le système étant immobile par rapport au sol, on peut évidemment choisir le plan de référence pour que l'angle de gisement soit identique à l'angle d'azimut. De même, un capteur angulaire 4b mesure l'angle de gisement du plan de visée du dispositif 6a.

Le moteur 3a et le moteur 3b sont disposés sur des plateformes horizontales 2a et 2b. Les plateformes 2a et 2b sont montées sur un mât vertical 1, pour que les dispositifs 6a et 6b se trouvent disposés à distance l'un de l'autre, la distance qui les sépare étant ici notée d.

Un câble électrique 8a relie le moteur 3a, le dispositif 6a et le capteur 4a à un circuit 9 de commande et de désignation d'objectif. De même un câble électrique 8b relie le moteur 3b, le dispositif 6b et le capteur 4b au circuit 9. Un bus 10 de transmission de données relie le circuit 9 à un système d'exploitation tactique non représenté et destiné à la commande du système d'armes.

En réponse aux signaux en sortie des capteurs angulaires 4a et 4b, et en sortie des dispositifs de visée 6a et 6b, le circuit 9 commande les moteurs 3a et 3b, détermine les trois coordonnées de la ou des sources de rayonnement infrarouge qui sont susceptibles d'être des cibles menaçantes, et transmet ces coordonnées au système d'exploration tactique désignant ainsi à celui-ci les objectifs à atteindre.

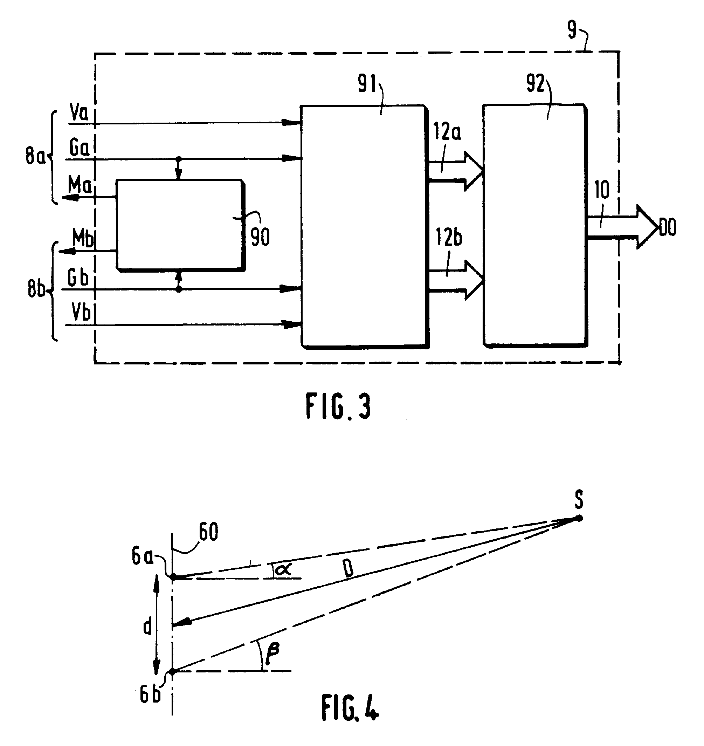

Le circuit 9 de commande et de désignation d'objectif est maintenant décrit, de façon plus détaillée, en référence à la figure 3.

Un circuit 90 de commande des moteurs est pourvu de deux entrées recevant les signaux de sortie des capteurs 4a et 4b respectivement, signaux notés Ga et Gb, respectivement, et qui représentent les valeurs mesurées des angles de gisement des plans de visée des dispositifs 6a et 6b, respectivement. Le circuit 90 est également pourvu de deux sorties délivrant des signaux Ma et Mb, respectivement, de commande des moteurs 3a et 3b, respectivement.

Un circuit 91 d'extraction des alarmes est pourvu de deux entrées recevant les signaux Ga et Gb, respectivement, et de deux entrées recevant les signaux vidéo de sortie des dispositifs 6a et 6b respectivement, signaux notés Va et Vb, respectivement. Le circuit 91 est également pourvu de deux bus numériques de sortie 12a et 12b. Le bus 12a transmet respectivement le gisement daté, le site daté, et l'amplitude datée de chaque alarme, c'est-à-dire de chaque source de rayonnement infrarouge relativement importante se trouvant dans la zone analysée par le dispositif de visée 6a au cours de chacun de ses tours autour de l'axe 60. Le bus 12b transmet les mêmes grandeurs datées pour chaque alarme de la zone analysée par le dispositif de visée 6b au cours de chacun de ses tours. Par grandeur datée, on entend ici la valeur de cette grandeur à un instant déterminé, assortie de la valeur de cet instant déterminé.

Un circuit 92 de détermination des cibles et de calcul de leur distance comprend deux entrées reliées aux bus 12a et 12b, respectivement, et une sortie reliée au bus numérique 10 délivrant un signal de désignation d'objectif, noté DO. Le signal DO de désignation d'objectif représente, pour chaque cible ou objectif, les valeurs de son gisement ou azimut, de son site, de sa distance, les valeurs des dérivées, par rapport au temps de ces trois grandeurs, la valeur de l'intensité du rayonnement infrarouge reçu en provenance de cette cible, et l'instant pour lequel ces valeurs ont été déterminées. Il comprend donc des informations sur la crédibilité des cibles en tant que menaces, afin de permettre au système d'exploitation tactique de prendre des décisions.

Avant la description plus détaillée de chacun des circuits 90, 91 et 92, le fonctionnement d'ensemble du sytème qui vient d'être décrit est abordé.

Le circuit 90 de commande des moteurs est agencé pour que les plans de visée des dispositifs 6a et 6b soient en permanence confondus, comme le montre la figure 2. Ainsi, toute source de rayonnement infrarouge se trouve-t-elle simultanément dans le plan de visée commun des deux dispositifs 6a et 6b.

Si cette source est relativement intense, et si elle se trouve dans la zone commune aux deux zones analysées par les dispositifs 6a et 6b respectivement, le circuit 91 d'extraction des alarmes délivre alors, sur chacun des bus 12a et 12b, l'angle de gisement, l'angle de site et l'intensité, datés, de cette alarme.

Il importe ici de noter que, si la source relativement intense dont il est question est une cible menaçante, elle a toutes les chances de se trouver dans la zone commune aux deux zones analysées. En effet, une cible menaçante peut être détectée par un dispositif comme le dispositif 6a à une distance en général très grande devant la distance d entre le dispositif 6a et le dispositif 6b. A cette distance, les deux zones analysées par chacun des deux dispositifs de visée 6a et 6b sont, en pratique, confondues.

Les deux angles de gisement ou azimut déterminés par les dispositifs 6a et 6b, et relatifs à une même alarme, sont en principe identiques, puisque les deux plans de visée des dispositifs 6a et 6b sont confondus.

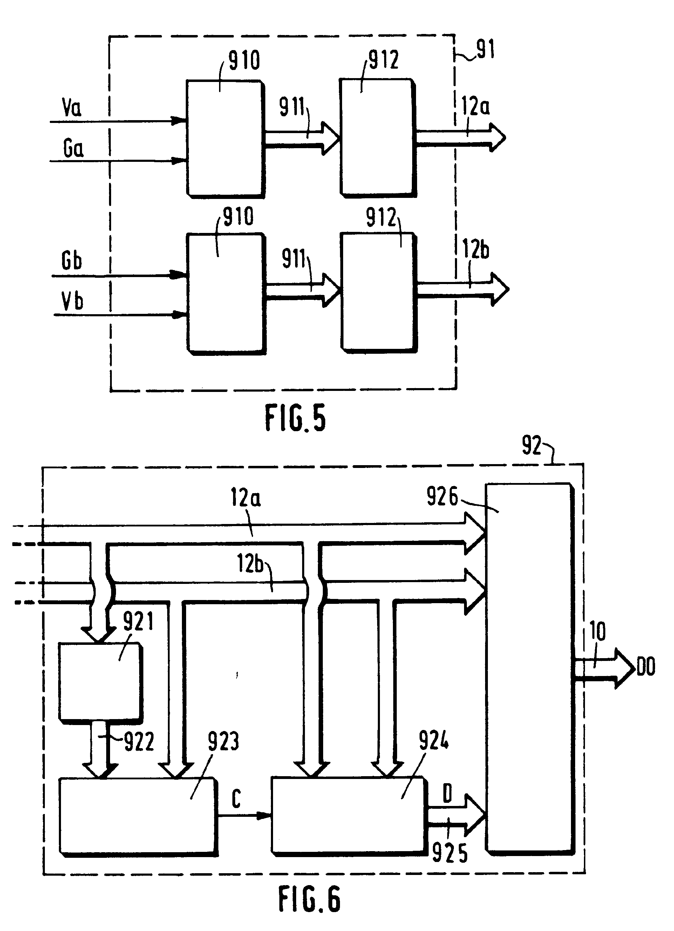

Par contre, et comme cela apparaît sur la figure 4, les deux angles de site déterminés par les dispositfs 6a et 6b pour une même alarme, ou source S, ne sont pas identiques. La figure 4 représente les positions relatives d'une telle source S et des dispositifs 6a et 6b considérés comme ponctuels, la distance d ayant été exagérément dilatée pour la clarté du dessin. La distance de la source S au milieu du segment qui joint les dispositifs 6a et 6b est notée D. On constate que l'angle de site $\alpha$ sous lequel la source S est vue depuis le dispositif 6a, angle qui est celui que fait le rayon allant de la source S vers le dispositif 6a avec le plan horizontal passant par le dispositif 6a, est différent de l'angle de site $\beta$ sous lequel la source S est vue depuis le dispositif 6b. Ici, comme le dispositif 6a est disposé au-dessus du dispositif 6b, la relation suivante est toujours vérifiée :

$$\alpha < \beta \quad (1)$$

Les deux intensités du rayonnement infrarouge relatifs à une même alarme, qui sont mesurées par les dispositifs 6a et 6b sont pratiquement identiques. En effet, comme les mesures sont effectuées simultanément, les seuls causes qui peuvent être à l'origine d'une différence sont une différence dans l'intensité du rayonnement émis par la source S, et une différence dans l'atténuation de ce rayonnement le long de son trajet vers le dispositif de visée correspondant. Or, compte tenu des valeurs relatives des distances d et D, les deux angles d'émission du rayonnement, et les deux trajets sont extrêmement voisins, comme le montre la figure 4 sur laquelle, comme cela a déjà été signalé, la distance d a été exagérément dilatée. De plus les variations du diagramme de rayonnement de la source et des causes d'atténuation sur les trajets sont relativement douces. Il en résulte que les deux intensités mesurées par les dispositifs 6a et 6b restent très proches l'une de l'autre.

Le circuit 92 utilise les critères précédents sur les valeurs des angles de gisement, des angles de site et des intensités transmises sur les bus 12a et 12b pour déterminer si ces valeurs sont bien relatives à une même source, et calculer, dans ce cas, la distance D de cette source par triangulation dans le plan de visée commun, à l'aide de la formule trigonométrique déduite de la figure 4 :

$$D = d \sqrt{1 + 0{,}25 \, (tg\alpha + tg\beta)^2} / (tg\beta - tg\alpha) \quad (2)$$

Le circuit 92 détermine ainsi la distance des sources alarmes, et par exemple en suivant leur évolution au cours des tours successifs, détermine s'il s'agit bien de cibles à atteindre.

Le circuit 90 de commande des moteurs comprend un circuit de commande du moteur 3a, délivrant le signal Ma approprié pour que le moteur 3a effectue une rotation régulière de vitesse convenable. Il comprend également un circuit d'asservissement, délivrant au moteur 3b le signal Mb, tel que le signal Gb reste en permanence égal au signal Ga. Le circuit 90 est donc à la portée de l'homme de métier, et il ne sera pas davantage décrit.

Le circuit 91 d'extraction des alarmes comprend ici, et en référence à la figure 5, deux chaînes identiques, une pour traiter les signaux Va et Ga relatifs au dispositif 6a, l'autre pour traiter les signaux Vb et Gb relatifs au dispositif 6b.

Chacune de ces chaînes comprend un circuit 910 de détermination des coordonnées et de l'intensité des pixels images des alarmes, et un circuit 912 de détermination des coordonnées angulaires et de l'intensité de chacune de ces alarmes.

Le circuit 910 de la chaîne relative au dispositif 6a est pourvu de deux entrées recevant le signal vidéo Va et le signal Ga, respectivement et il est relié au circuit 912 par un bus numérique 911. Ici, les signaux Va et Ga sont transformés en une suite d'échantillons numériques, représentant chacun un pixel de l'image infra-rouge de la zone analysée par le dispositif 6a. Plus précisément, chaque échantillon numérique représente les coordonnées angulaires et l'intensité datées de chaque pixel.

Les coordonnées angulaires sont l'angle de gisement, qui est celui du plan de visée du dispositif 6a au moment de la mesure de l'intensité du pixel, et l'angle de site, lié au rang, dans la barrette de détecteurs élémentaires, du détecteur élémentaires correspondant au pixel.

De façon connue, chacun de ces échantillons est "apodisé", c'est-à-dire qu'est retranchée, de la valeur de son intensité, la valeur moyenne de l'intensité des échantillons relatifs aux pixels d'une zone de taille appropriée centrée sur le pixel en question. Une telle "apodisation" produit des effets analogues à celui que produirait un filtrage passe-haut du signal vidéo Va.

Une valeur d'un seuil autoadaptatif est ensuite calculée pour chaque échantilon, égale à la valeur moyenne de la valeur absolue de l'intensité apodisée des échantillons relatifs aux pixels d'une zone de taille appropriée centrée sur le pixel en question.

Si la valeur absolue de l'intensité apodisée d'un pixel est supérieure à la valeur du seuil autoadaptatif calculée pour ce pixel, multipliée par un coefficient multiplicatif M déterminé comme cela sera expliqué dans la suite, et si l'intensité non apodisée de ce pixel est supérieure à l'intensité non apodisée de tous ses voisins, le pixel est considéré comme étant l'image d'une alarme, c'est-à-dire d'une des sources les plus significatives de rayonnement infra-rouge de la zone analysée par le dispositif 6a.

Le coefficient multiplicatif M est déterminé de façon à ce que les alarmes ne soient prises en compte qu'en nombre raisonnable. En effet, il est clair que si M est faible, un nombre important d'alarmes va être pris en compte, parmi lesquelles il y aura inévitablement des fausses alarmes, comme par exemple des bruits de détecteurs ou des parasites de paysage. Si, par contre, M est élevé, il n'y aura que peu d'alarmes prises en compte, mais alors, de vraies cibles menaçantes risquent d'être négligées.

Le nombre d'alarmes par tour est compté. La valeur du coefficient multiplicatif M reste la même pour un tour de rang donné, mais elle est réactualisée à chaque tour en fonction du nombre d'alarmes compté au tour précédent. Ainsi, la valeur du coefficient M sur chaque tour est ajustée pour que le nombre total d'alarmes par tour reste raisonnable.

Les coordonnées et l'intensité datées de chaque pixel image d'une alarme, ainsi que celles des pixels voisins de celui-ci sont transmises, par l'intermédiaire du bus 911, au circuit 912.

Le circuit 910 dont le fonctionnement détaillé vient d'être décrit comprend essentiellement des circuits de conversion analogique_numérique, de mémorisation d'échantillons numériques et de calcul. L'agencement de ces circuits pour réaliser les fonctions décrites est à la portée de l'homme du métier.

Le circuit 912 détermine, par extrapolation à partir des coordonnées et de l'intensité datées de chaque pixel image d'une alarme et de ses voisins, les coordonnées angulaires et l'intensité exactes de la source, ou alarme, correspondante. En effet, il est évident que les deux angles de site α et β de la figure 4 doivent être connus avec une bonne précision pour que soit accordée une certaine confiance au résultat du calcul de la distance D à partir de la formule (2) de triangulation. Or, en sortie du circuit 910, les coordonnées angulaires, et notamment l'angle de site du pixel image sont quantifiés. En particulier, l'angle de site est déterminé par le rang, dans la barrette de détecteurs élémentaires, du détecteur relatif à ce pixel, comme cela a déjà été signalé. Une telle quantification est évidemment à l'origine d'une imprécision, qui peut être tolérée si la distance D n'est pas trop grande par rapport à la distance d, mais qui doit être éliminée dans les autres cas. C'est le rôle du circuit 912, dans lequel les coordonnées angulaires exactes de l'alarme sont déterminées en calculant le barycentre des centres du pixel image de l'alarme et de ses voisins, affectés chacun d'un coefficient égal à son intensité. De même, afin de comparer les intensités des rayonnements reçus en provenance d'une même source par les dispositifs 6a et 6b, par exemple, il est préférable de connaître cette intensité avec une bonne précision. Or, dans certains cas, la tache due au rayonnement reçu par le dispositif 6a peut déborder autour du détecteur élémentaire sur lequel se forme principalement l'image. Dans ce cas, l'intensité de ce pixel image ne représente pas la totalité du rayonnement reçu, et il peut en résulter une erreur. A cet effet, dans le circuit 912, l'intensité de chaque pixel image d'une alarme se trouve augmentée des intensités des pixels voisins, de façon à reconstituer ainsi la totalité du rayonnement infrarouge reçu en provenance de la source alarme.

Ainsi le circuit 912 détermine l'angle de gisement daté, l'angle de site daté et l'intensité datée de chaque alarme, relativement au dispositif 6a, et il transmet ces valeurs au circuit 92 par l'intermédiaire du bus 12a.

Le circuit 912 dont le fonctionnement détaillé vient d'être décrit comprend principalement des circuits de calcul qui opèrent sur les coordonnées des centres et sur les intensités de chaque pixel image d'alarme et de ses voisins. Sa conception est à la portée de l'homme de métier.

La chaîne 910, 911 et 912 recevant les signaux Vb et Gb relatifs au dispositif 6b transmet l'angle de gisement daté, l'angle de site daté et l'intensité datée de chaque alarme, relativement au dispositif 6b, par l'intermédiaire du bus 12b.

Le circuit 92 de détermination des cibles et de calcul de leur distance est maintenant décrit en référence à la figure 6.

Un circuit 921 de calcul de fenêtre est pourvu d'une entrée numérique reliée au bus 12a et d'une sortie numérique reliée à un bus 922. Lorsqu'il reçoit, sur le bus 12a, les valeurs datées de l'angle de gisement, de l'angle de site et de l'intensité d'une alarme détectée à l'aide du dispositif 6a, le circuit 921 détermine les frontières de trois plages de valeurs possibles à l'intérieur desquelles doivent donc se trouver nécessairement et respectivement les valeurs de l'angle de gisement, de l'angle de site et de l'intensité d'une alarme datée de façon identique, mais détectée à l'aide du dispositif 6b, lorsque ces deux alarmes sont relatives à une même source. La plage des angles de gisement est centrée sur la valeur de l'angle de gisement du bus 12a et sa largeur dépend de la précision de la mesure des angles de gisement. Il en est presque de même pour la plage des intensités, centrée sur la valeur de l'intensité sur le bus 12a, et dont la largeur dépend de la précision de la mesure des intensités, et de l'amplitude maximale prévisible des variations entre les deux intensités reçues, variations dont il a déjà été question. En ce qui concerne la plage des angles de site, elle n'est pas centrée sur la valeur α de l'angle de site du bus 12a, compte tenu de la relation (1), qui indique que la valeur β de l'angle de site du bus 12b est toujours supérieure à la valeur α. La frontière inférieure de la plage des angles de site est donc la valeur α elle-même, diminuée d'une faible quantité tenant compte de la précision de la mesure des angles de site. La frontière supérieure dépend de la distance minimale à laquelle on estime que les cibles menaçantes peuvent apparaître dans la zone analysée. En effet, la valeur β est d'autant plus élevée, relativement à la valeur α, que la source est proche du système. Ainsi, on élimine les fausses alarmes dues aux oiseaux qui sont généralement détectés à distance assez proche. On peut considérer que l'ensemble des trois plages calculées par le circuit 921 forment une "fenêtre à trois dimensions" dont les frontières datées sont transmises sur le bus 922. Le circuit 921 est un circuit de calcul à la portée d'un homme du métier.

Un circuit 923 de comparaison à la fenêtre est pourvu de deux entrées numériques reliées respectivement au bus 922 et au bus 12b, et d'une sortie binaire délivrant un signal C au niveau haut si et seulement si les valeurs de l'angle de gisement, de l'angle de site, et de l'amplitude sur le bus 12b, datées de façon identique à la fenêtre sur le bus 922, sont comprises respectivement dans les trois plages définies par celle-ci. Le circuit 923 est évidemment à la portée de l'homme du métier.

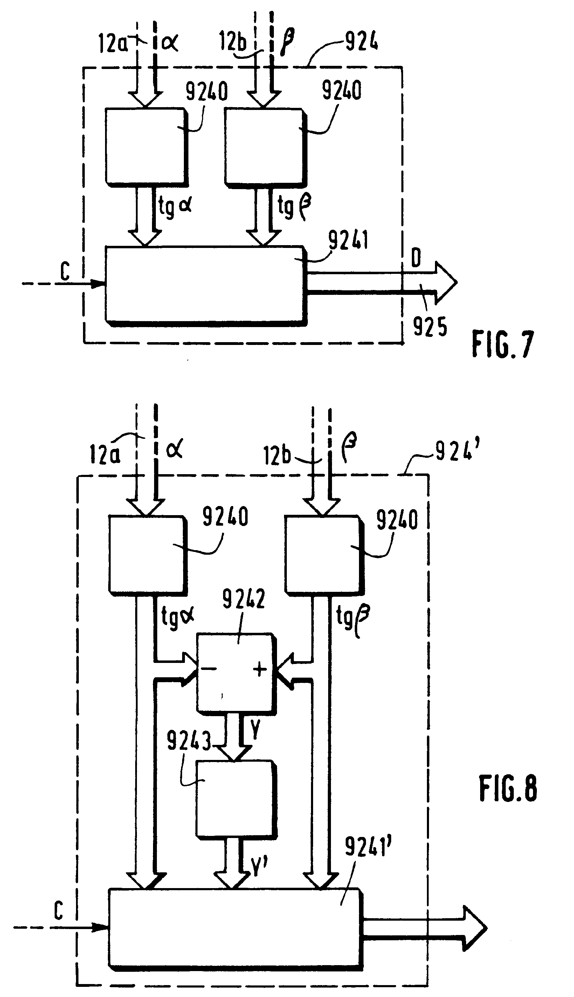

Un circuit 924 de calcul de la distance est pourvu de deux entrées numériques reliées respectivement au bus 12a et 12b, d'une entrée binaire recevant le signal C et d'une sortie numérique reliée à un bus 925. Lorsque le signal C est au niveau haut, le circuit 924 calcule la distance D à partir des valeurs des angles de site α et β sur les bus 12a et 12b respectivement. Lorsque le signal C est au niveau bas, le circuit 924 est inhibé. La formule du calcul utilisée par le circuit 924 est la formule (2), et la distance D ainsi calculée est envoyée sur le bus 925. Un schéma plus détaillé du circuit 924 est donné sur la figure 7, où l'on a fait apparaître deux circuits identiques 9240 de détermination, à partir des valeurs de α et β sur les bus 12a et 12b, des valeurs de tgα et tgβ, et un circuit 9241 de calcul de la formule (2). Le circuit 9241 est inhibé lorsque le signal C est au niveau bas. Ces circuits sont à la portée de l'homme du métier.

Un circuit 926 de désignation d'objectif est pourvu de trois entrées numériques reliées respectivement aux bus 12a, 12b et 925, et d'une sortie numérique délivrant le signal de désignation d'objectif DO. Celui-ci peut être élaboré dès qu'une valeur de la distance D est disponible sur le bus 925, cette valeur étant transmise au système d'armes avec des valeurs de gisement, du site, de l'intensité et de l'instant d'observation de la cible menaçante déterminées en réponse aux données sur les bus 12a et 12b. Toutefois, il est également possible de prévoir que le circuit 926 de désignation d'objectif compare les résultats obtenus sur plusieurs tours successifs, afin de s'assurer que cette cible est bien retrouvée d'un tour à l'autre, et afin de calculer notamment les dérivées, par rapport au temps, de l'angle de gisement, de l'angle de site et de la distance de la cible, afin de les transmettre également, par l'intermédiaire du bus 10, au système d'exploitation tactique. De même, et de façon connue, il est possible d'effectuer sur les coordonnées de la cible un filtrage prédictif. Le circuit 926 comprend des circuits de calcul et de mémorisation d'échantillons numériques, et sa conception est à la portée de l'homme du métier.

En se référant à la figure 8, une variante, notée 924', du circuit 924 de calcul de la distance est maintenant décrite.

Dans le circuit 924', on retrouve les circuits 9240 du circuit 924. Toutefois, il est prévu un circuit de soustraction numérique 9242, relié aux deux bus de sortie des circuits 9240, pour calculer une grandeur Y définie par la relation

$$Y = tg\beta - tg\alpha \quad (3)$$

Un filtre prédictif 9243 est pourvu d'un bus d'entrée recevant la différence Y en sortie du soustracteur 9242, et d'un bus de sortie délivrant la différence Y après filtrage, notée ici Y'.

Un circuit de calcul 9241' est pourvu de trois entrées, reliées respectivement aux deux bus de sortie des circuits 9240 et à celui du circuit 9243, et calcule la distance D d'après la relation :

$$D = d \sqrt{1 + 0,25 (tg\alpha + tg\beta)^2} / Y' \quad (4)$$

Comme le circuit 9241 du circuit 924, le circuit 9241' est inhibé si le signal C est au niveau bas.

Le filtre prédictif 9243 est agencé, de façon connue, pour mémoriser, à chaque tour, la valeur de Y qui résulte de la détermination des angles de site α et β de la source S, et pour conserver en mémoire les valeurs de Y mémorisées lors des n tours précédents. Les n valeurs ainsi mémorisées représentent l'évolution temporelle passée de Y, à partir de laquelle le circuit 9243 prédit la valeur de Y pour le tour présent. A cet effet, le circuit 9243 détermine un polynôme de régression, par exemple du 2ème ou du 3ème degré selon les accélérations maximales prévisibles de la source S, qui reproduit au mieux l'évolution temporelle passée de Y, et il calcule, à partir de ce polynôme, la valeur Y', qui est transmise au circuit 9241'. Ici, la valeur de Y au tour présent sert à la détermination du nouveau polynôme de régression, à partir de l'ancien polynôme, qui permet de calculer la valeur de Y', et ainsi de suite.

Les avantages d'un tel filtrage prédictif sont la prise en compte du passé de l'évolution de la source, qui introduit un filtrage dans la détermination de la distance, et réduit l'influence que pourrait avoir, dans un système sans filtrage, un point de mesure aberrant.

Dans le cas présent, il serait possible de compléter, dans le circuit 924, le circuit 9241 de calcul par un circuit de filtrage prédictif. Toutefois, la solution mise en oeuvre dans le circuit 924', où le filtrage prédictif n'est effectué que sur la quantité Y, a pour avantage le fait que l'erreur sur cette quantité étant liée uniquement à la précision de la mesure des angles de site, elle est donc indépendante de la distance D de la cible. Si l'on effectuait un filtrage prédictif sur la distance D de la cible, du fait que l'erreur sur cette distance varie comme le carré de cette distance, le poids accordé aux plus anciennes mesures de distance, qui ont lieu lorsque la cible est encore éloignée, serait trop important, et la précision du filtrage se trouverait réduite. Cet inconvénient est supprimé en effectuant le filtrage sur la quantité Y, et en effectuant le calcul de la vraie distance à partir de la quantité filtrée Y', comme cela vient d'être exposé. A ce sujet, il faut noter que la distance D est en pratique inversement proportionnelle à la quantité Y', le terme sous le radical des formules (2) et (4) n'intervenant qu'au second ordre. Naturellement, il est toujours possible d'effectuer, en plus du filtrage prédictif sur Y, un filtrage prédictif sur D, si ceci est jugé utile. Le circuit 924' comprend des circuits de calcul et de mémorisation qui sont à la portée de l'homme de métier.

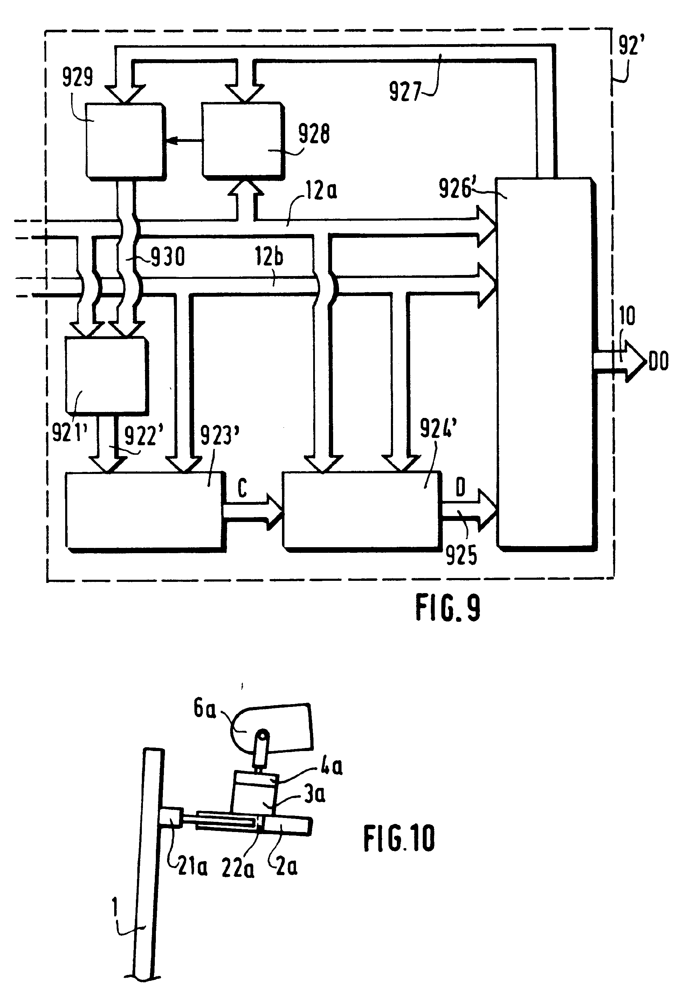

En référence maintenant à la figure 9, une variante, notée 92', du circuit 92, est maintenant décrite.

La différence essentielle entre le circuit 92' et le circuit 92 est dans le fait que le circuit 926 de désignation d'objectif y est remplacé par un circuit 926' de pistage et de désignation d'objectif.

La fonction de pistage réalisée par le circuit 926' se traduit par le fait lorsqu'une cible a été détectée, et sa distance D déterminée au tour de rang n, le circuit 926' détermine une "fenêtre de prédiction", ou "de pistage", à laquelle il affecte un "numéro de piste". La fenêtre de pistage est calculée à la manière de la fenêtre dont il a été question à propos du circuit 921, mais en tenant compte, ici, des changements possibles entre le tour de rang n et le tour de rang (n+1), compte tenu des accélérations maximales prévisibles des cibles attendues, de leurs possibles changements d'attitude, etc... La fenêtre de pistage est ici une fenêtre à "trois dimensions", comprenant une plage de valeurs possibles pour l'angle de gisement, une plage de valeurs possibles pour l'angle de site, et une plage de valeurs possibles pour l'intensité lors du tour de rang (n+1), plage déterminée en réponse aux valeurs déterminées lors du tour de rang n.

Les données caractérisant la fenêtre de pistage, ainsi que la distance D et le numéro de piste sont transmises, par l'intermédiaire d'un bus 927, à un circuit 928 de comparaison à la fenêtre de pistage, et à un circuit de porte 929.

Le circuit 928 de comparaison à la fenêtre de pistage est identique au circuit 923, et il est donc pourvu de deux entrées recevant respectivement le bus 927 et le bus 12a et d'une sortie binaire qui commande l'ouverture du circuit de porte 929.

Ce circuit de porte 929 est pourvu d'une entrée reliée au bus 927 et d'une sortie reliée à un bus 930. Le circuit de porte 929 est en fait une porte double qui laisse passer, lorsqu'il est ouvert, les données du bus 927 relatives à la distance D et au numéro de piste, sur le bus 930.

Un circuit 921' de calcul de la fenêtre, comparable au circuit 921, mais pourvu d'une deuxième entrée qui reçoit le bus 930, diffère du circuit 921 notamment par le fait que la frontière supérieure de la plage de valeurs possible pour l'angle de site $\beta$ sur le bus 12b est déterminée non plus pour correspondre à la distance minimale de détection, comme dans le circuit 921, mais en réponse à la distance D déterminée au tour précédent. Ceci permet, compte tenu des accélérations maximales prévisibles de la cible, de limiter la largeur de la plage, et d'améliorer les performances du système en présence d'un très grand nombre de cibles. Le circuit 921' transmet, sur le bus 922', et en plus des données relatives aux plages de la fenêtre, le numéro de piste. Des circuits 923' et 924', accomplissent les mêmes fonctions que les circuits 923 et 924, respectivement, en transmettant le numéro de piste qui se trouve ainsi restitué au circuit 926' de pistage et de désignation d'objectif.

Alors, le circuit 926' calcule une nouvelle fenêtre de pistage, à laquelle il affecte le même numéro de piste, et la nouvelle valeur de la distance, et qui va être utilisée pour le tour suivant.

Lors de ce tour suivant, le circuit 928 compare les données sur le bus 12a à la fenêtre de pistage. Si la cible S se trouve dans la fenêtre attendue, le numéro de piste et la nouvelle valeur de la distance sont transmises au circuit 921' qui détermine une fenêtre pour les données sur le bus 12b. Le circuit 923' vérifie que la cible S se trouve dans la fenêtre attendue et autorise le calcul de la nouvelle valeur de la distance, et ainsi de suite.

Ainsi, il apparaît que le circuit 926' suit véritablement, et comme son nom l'indique, la piste de chaque cible, d'un tour à l'autre. Ainsi le système est capable de traiter séparément, chacune des cibles d'une pluralité de cibles présentes simultanément dans la zone analysée.

Le système de l'invention, tel qu'il vient d'être décrit est implanté sur un mât 1 fixé au sol, pour la surveillance d'un site terrestre.

Ce système peut cependant, et avantageusement, être implanté sur un navire pour surveiller l'environnement de ce navire. Dans ce cas, le mât 1 est le mât du navire, et s'il reste sensiblement vertical, il est néanmoins soumis aux mouvements du navire, et il est nécessaire de compenser la mesure des angles pour tenir compte de l'influence de ces mouvements.

La première précaution à prendre consiste à calculer les angles d'azimut à partir des angles de gisement et de la position du bateau.

De plus, sur un navire, les plateformes 2a et 2b ne sont plus solidaires du mât 1, mais montées sur celui-ci de façon articulée, comme est cela est schématiquement montré sur la figure 10, relative à la plateforme 2a. Il est prévu pour chaque plateforme un système de stabilisation de type connu, disposé par exemple dans les boîtiers 21a et 22a de la figure 10, pour la maintenir en position horizontale quelle que soit l'orientation du mât 1. Un tel système n'est cependant pas parfait, et on ne peut faire l'hypothèse que chaque plateforme est à tout instant rigoureusement horizontale. On mesure donc en permanence, et dans deux plans perpendiculaires, les deux angles entre chaque plateforme et le mât 1, à l'aide de capteurs angulaires disposés dans les boîtiers 21a et 22a. Ceci permet la détermination de l'angle $\alpha_p$ entre le plan de la plateforme et le mât 1.

De même, la centrale de verticale du bâtiment détermine en permanence l'angle $\alpha_m$ entre le mât et un plan rigoureusement horizontal.

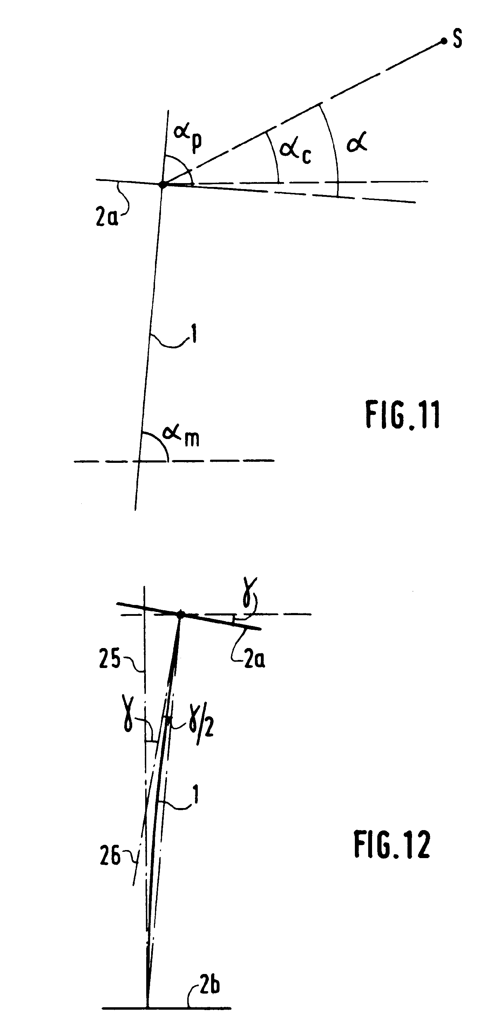

La figure 11 représente schématiquement ces différents angles dans la situation simplifiée où les angles $\alpha_p$ et $\alpha_m$ sont dans le même plan, en l'occurence celui de la figure.

Sur la figure 11, on a noté $\alpha$ l'angle de site sous lequel le dispositif 6a voit la source S, et qui n'est autre que l'angle entre le rayon qui vient de la source S et la plateforme 2a qui supporte le dispositif de visée 6a.

L'examen de la figure 11 montre que l'angle de site corrigé $\alpha_c$ de la source S à prendre en compte est lié aux angles $\alpha$, $\alpha_p$ et $\alpha_m$ par la relation :

$$\alpha_c = \alpha + \alpha_m - \alpha_p \quad (5)$$

Il est à la portée de l'homme de métier de prévoir, en aval de chaque circuit 912 de la figure 5, par exemple, un circuit qui, en réponse aux valeurs $\alpha_p$ et $\alpha_m$ déterminées comme indiqué, corrige l'angle $\alpha$, ou le cas échéant $\beta$, déterminé par le circuit 912 pour délivrer la valeur $\alpha_c$ corrigée selon la formule 5.

Naturellement, lorsque l'angle $\alpha_m$ entre le mât 1 et le plan horizontal est différent de 90°, la distance d des formules (2) et (4) doit être corrigée en la distance d' selon la formule :

$$d' = d \sin \alpha_m$$

En effet, la distance entre les dispositifs 6a et 6b à prendre en compte, pour les calculs de triangulation dans les circuits 9241 et 9241', est celle de la projection, selon un axe vertical, du segment qui joint les dispositifs 6a et 6b. La modification des circuits 9241 ou 9241' pour tenir compte en permanence de la valeur de l'angle $\alpha_m$ est à la portée de l'homme de métier.

De même, et ceci est vrai même lorsque le système est implanté au sol, le mât est toujours susceptible de se déformer, ce qui, compte tenu de la précision nécessaire sur la mesure des angles de site et de leur différence, peut être à l'origine d'erreurs dans la détermination de la distance D.

A cet effet, la flexion du mât est mesurée, pour évaluer les écarts angulaires entre les deux plateformes 2a et 2b et corriger en conséquence les coordonnées angulaires, et notamment les angles de site.

La figure 12 représente par exemple le cas d'un mât 1 dont la flèche est proportionnelle au carré de la longueur, et pour lequel est noté $\gamma$ l'angle dont il faut corriger l'angle de site de la plateforme supérieure 2a, la plateforme inférieure 2b étant supposée rigoureusement horizontale. Si l'on dispose, sur la plateforme 2b, un laser dont, dans un souci de simplification, on n'a représenté que le faisceau 25 perpendiculaire à cette plateforme 2b, et sur la plateforme 2a un système dont on n'a représenté que l'axe 26 perpendiculaire à cette plateforme 2a, pour mesurer la valeur de l'angle entre le faisceau 25 et l'axe 26, on mesure directement l'angle $\gamma$. On peut également, si l'on remplace le laser par une source omnidirectionnelle, mesurer l'angle entre l'axe 26 et le segment qui joint les deux plateformes, qui vaut ici, compte tenu de la loi de flexion du mât, $\gamma/2$. On pourrait également utiliser, pour la mesure de la flexion du mât, un ensemble de jauges de contraintes.

Naturellement, l'angle $\gamma$ doit être déterminé dans deux directions perpendiculaires. Il est à la portée de l'homme de métier de prévoir un circuit de correction de la valeur des angles en sortie du circuit d'extraction 91 pour tenir compte de la flexion ainsi mesurée.

Dans la description qui vient d'être faite, il n'a pas été mentionné, dans un souci de simplification, la commande de l'orientation en site des dispositifs 6a et 6b qui ont été implicitement supposés fixes. En pratique, les dispositifs 6a et 6b sont orientables en site à l'aide de moteurs et pourvus de codeurs angulaires qui permettent de déterminer l'angle de site des positions moyennes des lignes de visée 7a et 7b. Le circuit 90 est ici agencé pour commander ces moteurs de manière telle que les positions moyennes restent toujours parallèles et les angles de sites mesurés sont envoyés au circuit 91 qui détermine ainsi la valeur absolue des angles $\alpha$ et $\beta$.

De même, dans un souci de simplification, n'ont pas été mentionnés, dans le circuit 92, les circuits d'association deux par deux des alarmes détectées par les dispositifs 6a et 6b et dans le circuit 924', les circuits d'affectation, d'un tour à l'autre, permettant d'associer les valeurs de Y appartenant à la même cible. De tels circuits sont naturellement à la portée de l'homme de métier.

Naturellement, la portée de la présente demande n'est pas limitée à la description précédente du système de l'invention qui vient d'être faite à titre d'exemple.

C'est ainsi que, notamment, les dispositifs de visée 6a et 6b peuvent comporter des mosaïques de détecteurs élémentaires de forme autre que celle d'une simple barrette, comprenant notamment des éléments rectangulaires disposés en quinconce et se chevauchant verticalement, ou même ayant la forme de plusieurs barrettes disposées en quinconce. De même, il est à noter que le circuit 91 d'extraction d'alarme qui a été décrit peut être remplacé par tout dispositif de type connu de traitement d'image pour en extraire les sources les plus intenses.

De même, s'il est utile d'utiliser l'intensité du rayonnement reçu en provenance d'une source un peu à la manière d'une des coordonnées angulaires de cette source, ceci n'est pas obligatoire, et on peut notamment, pour simplifier le système, utiliser seulement des fenêtres bidimensionnelles en gisement et en site, voire des fenêtres monodimensionnelles en site.

De même, le système de l'invention n'est pas limité au domaine infrarouge, et peut être mis en oeuvre quelque soit le rayonnement émis naturellement par la cible et qui sert à sa détection.

Enfin, dans un souci de clarifier l'exposé, on a matérialisé, au cours de la description précédente, chacune des fonctions principales sous forme d'un bloc, ou circuit particulier. En pratique, certaines de ces fonctions, et notamment les fonctions de calcul peuvent être accomplies par un même circuit, notamment un microprocesseur.

## Revendications

1. Système de détermination de la position d'au moins une cible (S) émettant un rayonnement, comprenant :
   - deux dispositifs de visée (6a, 6b) passifs, sensibles audit rayonnement, disposés à distance l'un de l'autre et mobiles en rotation autour d'un axe commun (60) sensiblement vertical,
   - des moyens de mesure de l'intensité du rayonnement reçu par chacun des dispositifs de visée (6a, 6b) selon une ligne de visée (7a, 7b) balayant un plan de visée sensiblement vertical, commun aux deux dispositifs de visée (6a, 6b),
   - des moyens (91) pour, en réponse aux intensités mesurées (Va, Vb), extraire les valeurs des angles de site $(\alpha, \beta)$ de ladite cible (S) relativement aux deux dispositifs de visée (6a, 6b), et,
   - des moyens (924) pour, en réponse aux valeurs des angles de site $(\alpha, \beta)$, calculer la distance (D) de ladite cible (S) par triangulation dans ledit plan de visée commun sensiblement vertical,

   système caractérisé par le fait que,
   - chacun des deux dispositifs de visée (6a, 6b) comprend ses propres moyens de mesure de l'intensité du rayonnement reçu, ses propres moyens (3a, 3b) d'entraînement en rotation autour dudit axe commmun (60), et ses propres moyens (4a, 4b) de mesure de son angle de gisement (Ga, Gb), et,
   - il est prévu des moyens (90) de commande desdits moyens (3a, 3b) d'entraînement en rotation autour dudit axe commun (60), en réponse aux valeurs des angles de gisement (Ga, Gb) mesurés, agencés pour que lesdits angles de gisement (Ga, Gb) soient égaux.

2. Système selon la revendication 1, dans lequel il est prévu des moyens (921) pour déterminer, en réponse aux valeurs, en sortie desdits moyens d'extraction (91), de l'angle de gisement et de l'angle de site $(\alpha)$ relatifs à l'un des dispositifs de visée (6a), des premières plages de valeurs possibles pour l'angle de gisement et l'angle de site relatifs à l'autre dispositif de visée (6b), et des premiers moyens (923) pour comparer, aux premières plages de valeurs possibles, les valeurs, en sortie desdits moyens d'extraction (91), de l'angle de gisement et de l'angle de site $(\beta)$ relatifs à l'autre dispositif de visée (6b) et inhiber lesdits moyens (924) de calcul de la distance (D) de ladite cible lorsque ces valeurs en sortie desdits moyens d'extraction (91) ne sont pas comprises dans les premières plages de valeurs possibles.

3. Système selon la revendication 2, dans lequel lesdits moyens d'extraction (91) déterminent également les valeurs des intensités reçues par chacun des dispositifs de visée (6a, 6b) en provenance de ladite cible (S), lesdits moyens (921) de détermination des premières plages de valeurs possibles déterminent également, en réponse à la valeur, en sortie desdits moyens d'extraction (91) de l'intensité reçue par l'un des dispositifs de visée (6a), une première plage de valeurs possibles pour l'intensité reçue par l'autre dispositif de visée (6b), et les premiers moyens (923) de comparaison comparent également la valeur, en sortie desdits moyens d'extraction (91) de l'intensité reçue par l'autre dispositif de visée (6b) à la première plage correspondante de valeurs possibles.

4. Système selon l'une des revendications 1 à 3, dans lequel chacun desdits dispositifs de visée (6a, 6b) comprend une mosaïque de détecteurs élémentaires, lesdites intensités mesurées (Va, Vb) sont celles de pixels d'une image de la zone analysée par chacun des dispositifs de visée (6a, 6b), et lesdits moyens d'extraction comprennent des moyens (910) de détermination des coordonnées du pixel image de la cible (S) et des moyens (912) de détermination, par extrapolation, des coordonnées angulaires de la cible (S).

5. Système selon la revendication 4, dans lequel lesdits moyens (912) de détermination, par extrapolation, des coordonnées angulaires de la cible déterminent également, par extrapolation, l'intensité reçue en provenance de la cible (S).

6. Système selon l'une des revendications 1 à 5, dans lequel lesdits moyens (924) de calcul de la distance (D) de ladite cible comprennent des moyens (9240) de calcul des tangentes desdits angles de site $(\alpha, \beta)$, des moyens (9242) de calcul de la différence (Y) desdites tangentes, des moyens (9243) de filtrage prédictif de ladite différence (Y), sur plusieurs tours de la rotation autour dudit axe commun (60), et des moyens (9241') pour calculer la distance (D) de ladite cible (S) en réponse auxdites tangentes et à ladite différence filtrée (Y').

7. Système selon l'une des revendications 2 à 6, dans lequel il est prévu des moyens de pistage (926') pour déterminer, en réponse aux coordonnées angulaires de la cible (S) déterminées lors d'un tour de rang n, des deuxièmes plages de valeurs possibles pour les coordonnées angulaires de la cible (S) lors du tour de rang (n+1) et des deuxièmes moyens (928,921') pour comparer, aux deuxièmes plages de valeurs possibles, les valeurs déterminées lors du tour de rang (n+1), et réduire, en réponse à la distance mesurée lors du tour de rang n, ladite première plage de valeurs possibles d'angle de site, lorsque les valeurs déterminées au cours du tour de rang (n+1) sont comprises dans lesdites deuxièmes plages de valeurs possibles.

8. Système selon la revendication 7, dans lequel lesdits moyens de pistage (926') déterminent, en réponse à l'intensité reçue en provenance de la cible (S) lors du tour de rang n, une deuxième plage de valeurs possibles pour l'intensité reçue en provenance de la cible (S) lors du tour de rang (n+1), et les deuxièmes moyens (928) de comparaison comparent également la valeur de l'intensité reçue lors du tour de rang (n+1) à la deuxième plage correspondante.

9. Système selon l'une des revendications 1 à 8, dont les dispositifs de visée sont montés sur un mât (1) susceptible de fléchir, et comprenant des moyens (25,26) pour mesurer la flexion du mât (1) et corriger les valeurs desdits angles de gisement et de site en sortie desdits moyens d'extraction (91).

10. Système selon l'une des revendications 1 à 9, installé à bord d'un navire, et comprenant des moyens (21a, 22a) pour mesurer l'inclinaison des plateformes (2a) par rapport à l'horizontale et corriger les valeurs desdits angles de gisement et de site en sortie desdits moyens d'extraction (91).

**Patentansprüche**

1. System zur Bestimmung der Position von mindestens einem Ziel (S), das eine Strahlung aussendet, umfassend:
   - zwei für diese Strahlung empfindliche passive Visiervorrichtungen (6a, 6b), die in einem Abstand voneinander angeordnet sind und um eine im wesentlichen vertikale gemeinsame Achse (60) drehbar sind,
   - Mittel zur Messung der Intensität der von jedem dieser Visiervorrichtungen (6a, 6b) entlang einer Visierlinie (7a, 7b) empfangenen Strahlung, wobei die Visierlinie eine im wesentlichen vertikale und beiden Visiervorrichtungen (6a, 6b) gemeinsame Visierebene überstreicht,
   - Mittel (91), um in Abhängigkeit von den gemessenen Intensitäten (Va, Vb) die Werte der Zielhöhenwinkel (α, β) des Ziels (S) im Verhältnis zu den zwei Visiervorrichtungen (6a, 6b) auszulesen, und
   - Mittel (924), um in Abhängigkeit von den Werten der Zielhöhenwinkel (α, β) die Entfernung (D) des Ziels (S) durch Triangulation in der im wesentlichen vertikalen gemeinsamen Visierebene zu berechnen,
ein System, dadurch gekennzeichnet, daß
   - jede der zwei Visiervorrichtungen (6a, 6b) ihre eigenen Mittel zur Messung der Intensität der empfangenen Strahlung, ihre eigenen Mittel (3a, 3b) zum Antrieb zur Drehung um die gemeinsame Achse (60) und ihre eigenen Mittel (4a, 4b) zur Messung ihres Seitenrichtwinkels (Ga, Gb) umfaßt, und
   - Mittel (90) vorgesehen sind, die dazu dienen, die Mittel (3a, 3b) zum Antrieb zur Drehung um die gemeinsame Achse (60) in Abhängigkeit von den Werten der gemessenen Seitenrichtwinkel (Ga, Gb) so zu steuern, daß die Seitenrichtwinkel (Ga, Gb) gleich sind.

2. System nach Anspruch 1, bei dem Mittel (921) vorgesehen sind, um in Abhängigkeit von den am Ausgang der Auslesemittel (91) ausgegebenen Werten des Seitenrichtwinkels und des Zielhöhenwinkels (α), die sich auf eine der Visiervorrichtungen (6a) beziehen, erste Bereiche möglicher Werte für den Seitenrichtwinkel und den Zielhöhenwinkel, die sich auf die andere Visiervorrichtung (6b) beziehen, zu bestimmen, sowie erste Mittel (923), um mit den ersten Bereichen möglicher Werte die am Ausgang der Auslesemittel (91) ausgegebenen Werte des Seitenrichtwinkels und des Zielhöhenwinkels (β), die sich auf die andere Visiervorrichtung (6b) beziehen, zu vergleichen und die Mittel (924) zur Berechnung der Entfernung (D) des Ziels zu hemmen, wenn diese Werte am Ausgang der Auslesemittel (91) nicht in den ersten Bereichen möglicher Werte enthalten sind.

3. System nach Anspruch 2, bei dem die Auslesemittel (91) ferner die Werte der von jeder der Visiervorrichtungen (6a, 6b) empfangenen und von dem Ziel (S) kommenden Intensitäten bestimmen, wobei die Mittel (921) zur Bestimmung der ersten Bereiche möglicher Werte außerdem in Abhängigkeit von dem am Ausgang der Auslesemittel (91) ausgegebenen Wert der von einer der Visiervorrichtungen (6a) empfangenen Intensität einen ersten Bereich möglicher Werte für die von der anderen Visiervorrichtung (6b) empfangenen Intensität bestimmen und die ersten Vergleichsmittel (923) außerdem den am Ausgang der Auslesemittel (91) ausgegebenen Wert der von der anderen Visiervorrichtung (6b) empfangenen Intensität mit dem entsprechenden ersten Bereich möglicher Werte vergleichen.

4. System nach einem der Ansprüche 1 bis 3, bei dem jede der Visiervorrichtungen (6a, 6b) ein Mosaik von Elementardetektoren umfaßt, die gemessenen Intensitäten (Va, Vb) diejenigen von Pixeln eines Bildes der von jeder der Visiervorrichtungen (6a, 6b) abgetasteten Zone sind und die Auslesemittel Mittel (910) zur Bestimmung der Koordinaten des Bildpixels des Ziels (S) sowie Mittel (912) zur Bestimmung der Winkelkoordinaten des Ziels (S) mittels Extrapolation umfassen.

5. System nach Anspruch 4, bei dem die Mittel (912) zur Bestimmung der Winkelkoordinaten des Ziels mittels Extrapolation außerdem mittels Extrapolation die von dem Ziel (S) kommende empfangene Intensität bestimmen.

6. System nach einem der Ansprüche 1 bis 5, bei dem die Mittel (924) zur Berechnung der Entfernung (D) des Ziels Mittel (9240) zur Berechnung des Tangens der Zielhöhenwinkel ($\alpha$, $\beta$), Mittel (9242) zur Berechnung der Differenz (Y) dieser Tangenswerte, Mittel (9243) zur prädiktiven Filterung der Differenz (Y) über mehrere Umdrehungen um die gemeinsame Achse (60) und Mittel (9241'), um die Entfernung (D) des Ziels (S) in Abhängigkeit von den Tangenswerten und der gefilterten Differenz (Y') zu berechnen, umfassen.

7. System nach einem der Ansprüche 2 bis 6, bei dem Mittel zur Spurverfolgung (926') vorgesehen sind, um in Abhängigkeit von den während einer Umdrehung mit dem Rang n bestimmten Winkelkoordinaten des Ziels (S) zweite Bereiche möglicher Werte für die Winkelkoordinaten des Ziels (S) bei der Umdrehung mit dem Rang (n+1) zu bestimmen, sowie zweite Mittel (928, 921'), um mit den zweiten Bereichen möglicher Werte die während der Umdrehung mit dem Rang (n+1) bestimmten Werte zu vergleichen und in Abhängigkeit von der während der Umdrehung mit dem Rang n gemessenen Entfernung den ersten Bereich möglicher Zielhöhenwinkelwerte einzuschränken, wenn die im Verlauf der Umdrehung mit dem Rang (n+1) bestimmten Werte in den zweiten Bereichen möglicher Werte enthalten sind.

8. System nach Anspruch 7, bei dem die Mittel zur Spurverfolgung (926') in Abhängigkeit von der vom Ziel (S) kommenden und während der Umdrehung mit dem Rang n empfangenen Intensität einen zweiten Bereich möglicher Werte für die von dem Ziel (S) kommende und während der Umdrehung mit dem Rang (n+1) empfangene Intensität bestimmen und die zweiten Vergleichsmittel (928) ferner den Wert der während der Umdrehung mit dem Rang (n+1) empfangenen Intensität mit dem entsprechenden zweiten Bereich vergleichen.

9. System nach einem der Ansprüche 1 bis 8, dessen Visiervorrichtungen auf einem Mast (1) montiert sind, der sich biegen kann, und Mittel (25, 26) umfaßt, um die Biegung des Masts (1) zu messen und die Seitenrichtwinkel- und Zielhöhenwinkelwerte am Ausgang der Auslesemittel (91) zu korrigieren.

10. System nach einem der Ansprüche 1 bis 9, das an Bord eines Wasserfahrzeugs installiert ist und Mittel (21a, 22a) umfaßt, um die Neigung der Plattformen (2a) in bezug auf die Horizontale zu messen und die Seitenrichtwinkel- und Zielhöhenwinkelwerte am Ausgang der Auslesemittel (91) zu korrigieren.

## Claims

1. System for determining the position of at least one target (S) emitting radiation, comprising:

two passive sighting devices (6a,6b), sensitive to said radiation, disposed at a distance from each other and movable in rotation about a substantially vertical common axis (60),

means for measuring the intensity of the radiation received by one of the sighting devices (6a,6b) along a sighting line (7a,7b) scanning a substantially vertical sighting plane, common to the two sighting devices (6a,6b),

means (91) for extracting, in response to the intensities measured (Va,Vb), the values of the elevation angles ($\alpha$, $\beta$) of said target (S) relatively to the two sighting devices (6a,6b), and

means (924) for computing, in response to the values of the elevation angles ($\alpha$, $\beta$), the distance (D) of said target (S) by triangulation in said substantially vertical common sighting plane,

system characterized by the fact that

each of the two sighting devices (6a,6b) comprises its own means for measuring the intensity of the radiation received, its own drive means (3a,3b) for driving it in rotation about said common axis (60) and its own means (4a,4b) for measuring its bearing angle (Ga,Gb), and

means (90) are provided for controlling said means (3a,3b) driving it in rotation about said common axis (60), in response to the values of the bearing angles (Ga,Gb) measured, and arranged so that said bearing angles (Ga,Gb) are equal.

2. System as claimed in claim 1, wherein means (921) are provided for determining, in response to the values at the output of said extraction means (91) of the bearing angle and of the elevation angle ($\alpha$) relative ot one of the sighting devices (6a), first ranges of possible values for the bearing angle and the elevation angle relative to the other sighting device (6b) and first means (923) for comparing, with the first ranges of possibles values, the values at the output of said extraction means (91) of the bearing angle and of the elevation angle ($\beta$) relative to the other sighting device (6b) and inhibiting said means (924) computing the distance (D) of said target when these values at the output of said extraction means (91) are not included in the first ranges of possible values.

3. System as claimed in claim 2, wherein said extraction means (91) also determine the values of the intensities received by each of the sighting devices (6a,6b) from said target (S), said means (921) for determining the first ranges of possible values also determine, in response to the value at the output of said extraction means (91) of the intensity received by one of the sighting devices (6a), a first range of possible values for the intensity received by the other sighting device (6b) and the first comparison means (923) also compare the value at the output of said extraction means (91) of the intensity received by the other sighting device (6b) with the first corresponding range of possible values.

4. System as claimed in one of claims 1 to 3, wherein each of said sighting devices (6a,6b) comprises a mosaic of elementary detectors, said measured intensities (Va,Vb) are those of pixels of an image of the zone analyzed by each of the sighting devices (6a,6b), and said extraction means comprise means (910) for determining the coordinates of the image pixel of the target (S) and means (912) for determining the angular coordinates of the target (S) by extrapolation.

5. The system as claimed in claim 4, wherein said means (912) for determining the angular coordinates of the target by extrapolation also determine by extrapolation the intensity received from the target (S).

6. The system as claimed in one of claims 1 to 5, wherein said means (924) for computing the distance (D) of the target comprise means (9240) for computing the tangents of said elevation angles ($\alpha,\beta$), means (9242) for computing the difference (Y) of said tangents, means (9243) for the predictive filtering of said difference (Y) over several revolutions of rotation about said common axis (60), and means (9241') for computing the distance (D) of said target (S) in response to said tangents and said filtered difference (Y').

7. The system as claimed in one of claims 2 to 6, wherein tracking means (926') are provided for determining, in response to the angular coordinates of the target (S) determined during a revolution of rank $n$, second ranges of possible values for the angular coordinates of the targert (S) during the revolution of rank (n + 1), and second means (928,921') for comparing, with the second ranges of possible values, the values determined during the revolution of rank (n + 1) and reducing, in response to the distance measured during the revolution of rank n, said first range of possible elevation angle values, when the values determined during the revolution of rank (n + 1) are included in said second ranges of possible values.

8. The system as claimed in claim 7, wherein said tracking means (926') determine, in response to the intensity received from the target (S) during the revolution of rank $n$, a second range of possible values for the intensity received from the target (S) during the revolution of rank (n + 1), and the second comparison means (928) also compare the value of the intensity received during the revolution of rank (n + 1) with the second corresponding range.

9. The system as claimed in one of claims 1 to 8, wherein the sighting devices are mounted on a mast (1) liable to flex and comprising means (25,26) for measuring the flexion of the mast (1) and correcting the values of said bearing and elevation angles at the output of said extraction means (91).

10. The system as claimed in one of claims 1 to 9, installed on board a ship, and comprising means (21a,22a) for measuring the slant of the platforms (2a) with respect to the horizontal and correcting the values of said bearing and elevation angles at the output of said extraction means (91).

FIG.1

FIG.2

FIG. 3

FIG. 4

FIG.5

FIG.6

12a ↗ α          12b ⌐ β          924

9240          9240

tg α          tg β          9241

C                              D

925          **FIG.7**

12a ⌐ α                    β          924'

9240          9240

tg α          9242          tg β

−  +

γ

9243

**FIG.8**

γ'          9241'

C

18

FIG.9

FIG.10

FIG.11

FIG.12

20